# EUROPEAN PATENT APPLICATION

(11) **EP 2 743 844 A2**
(43) Date of publication of application: **18.06.2014**
(21) Application number: 13196890.1
(22) Date of filing: 12.12.2013
(51) Int. Cl.: G06F 17/30

(54) **Image search systems and methods**

(30) Priority: 13.12.2012 US 201213713814
(71) Applicant: HTC Corporation, Taoyuan County 330 (TW)
(72) Inventor: Chen, Ying-Chung, 330 Taoyuan City (TW); Lu, Tai-Ling, 330 Taoyuan City (TW); Chang, Wen-Chi, 330 Taoyuan City (TW)
(74) Representative: Ljungberg, Robert

(57) **Abstract**

Image search systems and methods are provided. The image search system includes a storage unit, a display unit, and a processing unit. The storage unit includes a plurality of image, each having a characteristic value. The processing unit receives a specifying of a target image, analyzes at least one content feature of the target image, obtains at least one capturing feature of the target image, and calculates a characteristic value for the target image according to the at least one content feature and the at least one capturing feature of the target image. The processing unit compares the characteristic value of the target image with the characteristic value of the respective image in the storage unit, thus to generate a similarity score for the respective image in the storage unit. The processing unit displays the images in sequence via the display unit according to the corresponding similarity scores.

## Description

### BACKGROUND OF THE INVENTION

### Field of the Invention

The disclosure relates generally to image management, and, more particularly to image search systems and methods that search images according to multiple features, such as a content feature and a capturing feature of the images.

### Description of the Related Art

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become necessities of life.

Generally, a handheld device may be equipped with a touch-sensitive display unit. Users can directly perform related operations, such as application operations and data input via the touch-sensitive display unit. For example, a user can move his finger on the touch-sensitive display unit to browse image data in the device. Currently, when users want to search specific images in the device, the search procedure must follow the directory structure of the image storage, and different browsing modes and classification modes must be frequently switched if the images are disorderly distributed in a timeline, or located in different classifications. The conventional search procedure for images is inconvenient for users.

### BRIEF SUMMARY OF THE INVENTION

Image search systems and methods are provided. It is an object of the present invention to provide an image search system and method. This object can be achieved by the features of the independent claims. Further enhancements are characterized by the dependent claims.

An embodiment of an image search system includes a storage unit, a display unit, and a processing unit. The storage unit includes a plurality of image, each having a characteristic value. The processing unit receives a specifying of a target image, analyzes at least one content feature of the target image, obtains at least one capturing feature of the target image, and calculates a characteristic value for the target image according to the at least one content feature and the at least one capturing feature of the target image. The processing unit compares the characteristic value of the target image with the characteristic value of the respective image in the storage unit, thus to generate a similarity score for the respective image in the storage unit. The processing unit displays the images in sequence via the display unit according to the corresponding similarity scores.

In an embodiment of an image search method, a plurality of image is provided, wherein each of the images has a characteristic value. A specifying of a target image is received. At least one content feature of the target image is analyzed, and at least one capturing feature of the target image is obtained. A characteristic value is calculated for the target image according to the at least one content feature and the at least one capturing feature of the target image. Then, the characteristic value of the target image is compared with the characteristic value of the respective image in the storage unit, thus to generate a similarity score for the respective image. The images are displayed in sequence according to the corresponding similarity scores.

In some embodiments, each of the at least one content feature and the at least one capturing feature has a weighting, and the processing unit calculates the characteristic value for the target image according to the at least one content feature and the at least one capturing feature of the target image, and the corresponding weighting.

In some embodiments, the characteristic value of the respective image in the storage unit is calculated in advance or dynamically calculated after the target image is specified.

In some embodiments, the at least one content feature of the target image is analyzed by detecting a color of the target image, a texture of the target image, a shape of the target image, at least one feature point in the target image, at least one landmark in the target image, or a face in the target image.

In some embodiments, the at least one capturing feature comprises an aperture size, a shutter value, an ISO value, or a parameter for white balance.

Image search methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description of exemplary embodiments with reference to the accompanying drawings, wherein:
Fig. 1 is a schematic diagram illustrating an embodiment of an image search system of the invention;
Fig. 2 is a flowchart of an embodiment of an image search method of the invention; and
Figs. 3A and 3B are schematic diagrams illustrating an embodiment of an example of image search of the invention.

### DETAILED DESCRIPTION OF THE INVENTION

Image search systems and methods are provided.

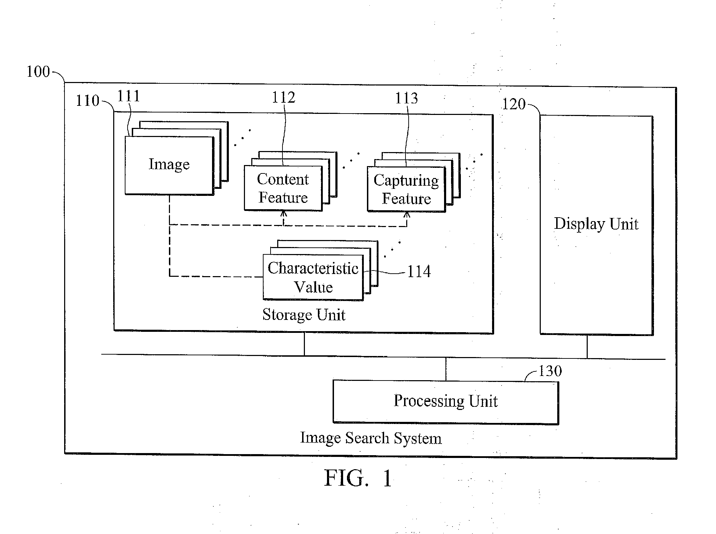

Fig. 1 is a schematic diagram illustrating an embodiment of an image search system of the invention. The image search system 100 can be used in an electronic device, such as a PDA (Personal Digital Assistant), a smart phone, a mobile phone, an MID (Mobile Internet Device, MID), a laptop computer, a car computer, a digital camera, a multi-media player, a game device, or any other type of mobile computational device, however, it is to be understood that the invention is not limited thereto.

The image search system 100 comprises a storage unit 110, a display unit 120, and a processing unit 130. The storage unit 110 comprises a plurality of images 111, at least one content feature 112 and at least one capturing feature 113 corresponding to the respective image 111, and a characteristic value 114 corresponding to the respective image 111. It is noted that, the at least one content feature 112 can be obtained by analyzing the content of the image 111. It is understood that, in some embodiments, the at least one content feature 112 comprises a color, a texture and/or a shape of an image, and/or at least one feature point, at least one landmark and/or a face in an image. The capturing feature 113 may be parameters describing states occurring when the image 111 was captured. It is understood that, in some embodiments, the at least one capturing feature 113 comprises an aperture size, a shutter value, an ISO value, and/or a parameter for white balance. The characteristic value 114 corresponding to the respective image 111 can be calculated according to the at least one content feature 112 and the at least one capturing feature 113 of the image 111. It is understood that, in some embodiments, the characteristic value 114 of the respective image 111 in the storage unit 110 can be calculated in advance or dynamically calculated when the image search is activated, for example, after a target image is specified. The display unit 120 can be used to display the images and related interfaces and data. In some embodiments, the display unit 120 can be integrated with a touch-sensitive device (not shown) to be a touch-sensitive display unit. The touch-sensitive device has a touch-sensitive surface comprising sensors in at least one dimension to detect contact and movement of an object, such as a stylus, finger, or any other input tool on the touch-sensitive surface. Users can directly perform related selections and input via the touch-sensitive display unit. The processing unit 130 performs the image search method of the invention, which will be discussed further in the following paragraphs.

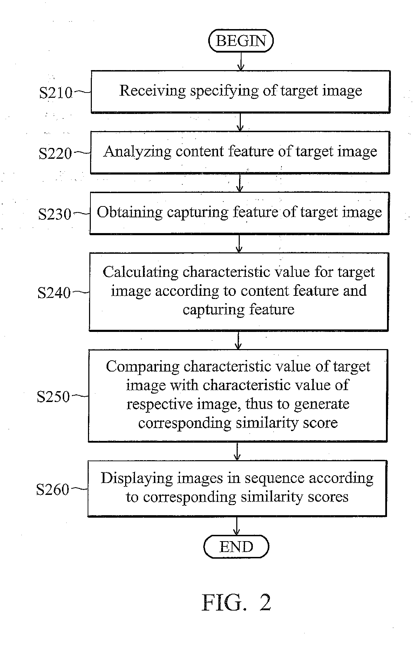

Fig. 2 is a flowchart of an embodiment of an image search method of the invention. The image search method can be used in an electronic device, such as a PDA, a smart phone, a mobile phone, an MID, a laptop computer, a car computer, a digital camera, a multi-media player, a game device, or any other type of mobile computational device, however, it is to be understood that the invention is not limited thereto.

In step S210, a specifying of a target image is received. It is understood that, the target image can be an image already stored in the storage unit 110. In some embodiments, the target image may be an image currently captured via an image capturing unit (not shown) of the electronic device. After the target image is specified, in step S220, at least one content feature of the target image is analyzed. As described, the at least one content feature can be obtained by analyzing the content of the target image. It is understood that, in some embodiments, the at least one content feature comprises a color, a texture and/or a shape of the target image, and/or at least one feature point, at least one landmark and/or a face in the target image. In step S230, at least one capturing feature of the target image is obtained. Similarly, the capturing feature may be related parameters describing states during the target image is captured. It is understood that, in some embodiments, the at least one capturing feature 113 comprises an aperture size, a shutter value, an ISO value, and/or a parameter for white balance. It is noted that, in some embodiments, the at least one capturing feature can be obtained from the Exif (Exchangeable Image File) data in an image file of the target image. Then, in step S240, a characteristic value is calculated for the target image according to the at least one content feature and the at least one capturing feature of the target image. It is understood that, a transformation model can be provided for the respective content feature and the capturing feature. The transformation model can be used to transform the feature data of the respective content feature or the capturing feature into a feature value. The feature values of the respective content feature and the capturing feature can be combined to generate the characteristic value. It is understood that, in some embodiments, each of the at least one content feature and the at least one capturing feature may have a weighting, and the characteristic value for the target image can be calculated according to the at least one content feature and the at least one capturing feature of the target image, and the corresponding weighting. After the characteristic value of the target image is calculated, in step S250, the characteristic value of the target image is compared with the characteristic value of the respective image in the storage unit 110, thus to generate a similarity score for the respective image. It is understood that, in some embodiments, the characteristic value of the respective image in the storage unit 110 can be calculated in advance or dynamically calculated after the target image is specified. It is noted that, during the comparing of characteristic value, when the difference between the characteristic value of the target image and that of the image in the storage unit is smaller, the similarity score for the image is higher. Then, in step S260, the images are displayed in the display unit 120 in sequence according to the corresponding similarity scores. That is, the image with the highest similarity score will be the first image displayed in the search results.

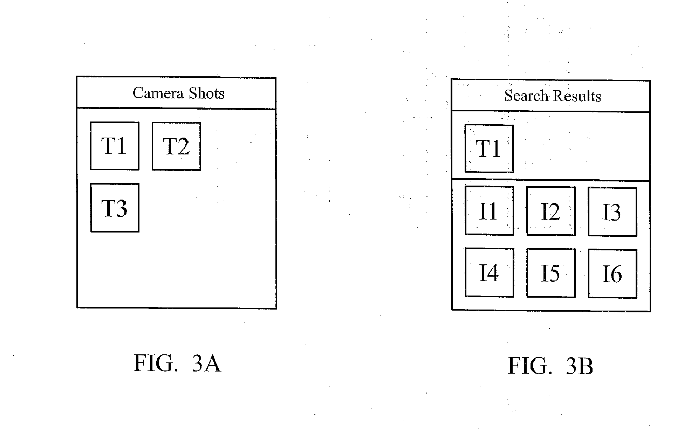

For example, a user uses the camera of the electronic device to capture images, and the captured images, such as images T1, T2 and T3, can be displayed in an interface, as shown in Fig. 3A. When the user wants to search images similar to the captured image T1 in the device, the captured image T1 can be specified via the touch-sensitive display unit. Once the image T1 is specified, the content features and the capturing features of the image T1 are analyzed and obtained, and the characteristic value of the image T1 is accordingly calculated. The characteristic value of the specified image T1 is compared with the characteristic value of the respective image in the device, thus to generate a similarity score for the respective image. Then, the respective images are displayed in a search result interface in sequence according to the respective similarity scores, as shown in Fig. 3B, wherein the display order is image I1, image I2, image I3, image I4, image I5, and image I6, and the similarity score of the image I1 is the highest. It is understood that, the arrangement of images displayed in the interface of Fig. 3B is only an example of the present application, and the present invention is not limited thereto.

Therefore, the image search systems and methods can search images according to multiple features, such as a content feature and a capturing feature of the images, thus efficiently completing the image search operation in the electronic devices.

Image search methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. An image search system for use in an electronic device, comprising:
a storage unit comprising a plurality of images, wherein each image has a characteristic value;
a display unit; and
a processing unit receiving a specifying of a target image, analyzing at least one content feature of the target image, obtaining at least one capturing feature of the target image, calculating a characteristic value for the target image according to the at least one content feature and the at least one capturing feature of the target image, comparing the characteristic value of the target image with the characteristic value of the respective image in the storage unit, thus to generate a similarity score for the respective image in the storage unit, and displaying the images in sequence via the display unit according to the corresponding similarity scores.

2. The system of claim 1, wherein each of the at least one content feature and the at least one capturing feature has a weighting, and the processing unit calculates the characteristic value for the target image according to the at least one content feature and the at least one capturing feature of the target image, and the corresponding weighting.

3. The system of claim 1 or 2, wherein the characteristic value of the respective image in the storage unit is calculated in advance or dynamically calculated after the target image is specified.

4. The system according to any one of the preceding claims, wherein the processing unit analyzes the at least one content feature of the target image by detecting a color of the target image, a texture of the target image, a shape of the target image, at least one feature point in the target image, at least one landmark in the target image, or a face in the target image.

5. The system according to any one of the preceding claims, wherein the at least one capturing feature comprises an aperture size, a shutter value, an ISO value, or a parameter for white balance.

6. An image search method for use in an electronic device, comprising:
providing a plurality of images, wherein each image having a characteristic value;
receiving a specifying of a target image;
analyzing at least one content feature of the target image;
obtaining at least one capturing feature of the target image;
calculating a characteristic value for the target image according to the at least one content feature and the at least one capturing feature of the target image;
comparing the characteristic value of the target image with the characteristic value of the respective image, thus to generate a similarity score for the respective image; and
displaying the images in sequence according to the corresponding similarity scores.

7. The method of claim 6, wherein each of the at least one content feature and the at least one capturing feature has a weighting, and the characteristic value for the target image is calculated according to the at least one content feature and the at least one capturing feature of the target image, and the corresponding weighting.

8. The method of claim 6 or 7, wherein the characteristic value of the respective image is calculated in advance or dynamically calculated after the target image is specified.

9. The method according to any one of claim 6 to 8, wherein the at least one content feature of the target image is analyzed by detecting a color of the target image, a texture of the target image, a shape of the target image, at least one feature point in the target image, at least one landmark in the target image, or a face in the target image.

10. The method according to any one of claim 6 to 9, wherein the at least one capturing feature comprises an aperture size, a shutter value, an ISO value, or a parameter for white balance.
